(19) Europäisches Patentamt / European Patent Office / Office européen des brevets

(11) **EP 3 340 114 B1**

(12) **FASCICULE DE BREVET EUROPEEN**

(45) Date de publication et mention
de la délivrance du brevet:
**30.09.2020 Bulletin 2020/40**

(51) Int Cl.:
**G06K 19/07** *(2006.01)*     **G06K 19/073** *(2006.01)*

(21) Numéro de dépôt: **16206224.4**

(22) Date de dépôt: **22.12.2016**

(54) **CIRCUIT RFID A DEUX FREQUENCES DE COMMUNICATION MUNI D'UNE BOUCLE D'INVIOLABILITE**

RFID-SCHALTKREIS MIT ZWEI KOMMUNIKATIONSFREQUENZEN, DER MIT EINEM SICHERUNGSKREISLAUF AUSGESTATTET IST

RFID CIRCUIT WITH TWO COMMUNICATION FREQUENCIES PROVIDED WITH A TAMPER-PROOF LOOP

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**27.06.2018 Bulletin 2018/26**

(73) Titulaire: **EM Microelectronic-Marin SA**
**2074 Marin (CH)**

(72) Inventeurs:
• **Lamothe, Christian**
**2105 Travers (CH)**
• **Muller, Paul**
**1023 Crissier (CH)**
• **Stojanovic, Goran**
**2000 Neuchâtel (CH)**

(74) Mandataire: **Giraud, Eric et al**
**ICB**
**Ingénieurs Conseils en Brevets SA**
**Faubourg de l'Hôpital 3**
**2001 Neuchâtel (CH)**

(56) Documents cités:
**EP-A1- 0 825 554     WO-A1-2006/102678**
**US-A1- 2011 043 339**

EP 3 340 114 B1

**Description**

DOMAINE TECHNIQUE

La présente invention concerne un circuit RFID à deux fréquences de communication muni d'une boucle d'inviolabilité liée à une unité de gestion. L'unité de gestion de la boucle d'inviolabilité est reliée à une unité logique ou à un processeur du circuit RFID pour être contrôlée.

ARRIERE-PLAN TECHNOLOGIQUE

Il est connu de munir un circuit électronique d'une partie de détection d'inviolabilité notamment pour le contrôle d'authenticité de produits contre d'éventuelles contrefaçons. Cette partie de détection peut généralement être incorporée dans un circuit intégré du type CMOS agissant comme un transpondeur. Une boucle d'inviolabilité à placer sur un produit à authentifier est reliée à des bornes ou plages de connexion du circuit électronique en liaison à la partie de détection. La partie de détection surveille la présence ou non d'un court-circuit entre les deux bornes de connexion, c'est-à-dire si la boucle d'inviolabilité est brisée ou non brisée.

Dans le cas d'un produit tel qu'une bouteille de vin, la boucle d'inviolabilité peut être intégrée par exemple dans le bouchon en liège et peut être brisée lors de l'introduction d'un tire-bouchon. La partie de détection permet donc de contrôler, si la boucle est brisée ou non brisée. Par conséquent, il est impossible de réutiliser le circuit électronique, qui peut être un transpondeur, dans un produit contrefait de manière à faire croire aux gens, qu'il s'agit d'un produit authentique. Il doit également être possible de communiquer par le transpondeur avant et après l'ouverture de la bouteille, c'est-à-dire après la destruction de la boucle ou du court-circuit. L'antenne du transpondeur ne peut donc pas être utilisée comme boucle d'inviolabilité, car cela entraverait la communication de signaux sans fil vers ou depuis le transpondeur à destination d'un lecteur RFID.

Dans la demande de brevet US 2006/0214789 A1 et en référence à la figure 1, il est décrit un transpondeur RFID 100 du type passif avec un capteur de sécurité comme une boucle d'inviolabilité 101. Le transpondeur comprend au moins une antenne 110 pour pouvoir communiquer avec un lecteur RFID 200 par une antenne 210. Le transpondeur RFID 100 comprend des bornes séparées pour connecter la boucle d'inviolabilité 101. Le transpondeur 100 comprend encore une unité de réception et d'émission de signaux radiofréquences 102 reliée à l'antenne 110 et fournissant l'alimentation à un circuit d'alimentation 105. Une unité logique 103 est prévue avec une mémoire dans laquelle est mémorisé un code d'identification à transmettre, et reliée à un circuit de détection d'état 104 de la boucle d'inviolabilité.

Dans cette demande de brevet US 2006/0214789 A1, rien n'est décrit en ce qui concerne l'utilisation d'une telle boucle d'inviolabilité pour un transpondeur, qui doit travailler sous différents champs électromagnétiques RF. Aucune disposition n'est prévue pour l'agencement d'une telle boucle pour un transpondeur capable de recevoir ou d'émettre des signaux à des fréquences porteuses différentes, ce qui constitue un inconvénient.

Dans le brevet US 9,082,057 B2 et en référence à la figure 2, il est décrit un transpondeur RFID 100 du type passif avec une boucle d'inviolabilité 101. Le transpondeur 100 comprend un récepteur 102 et un émetteur 109 de signaux radiofréquences. Il comprend encore une mémoire non volatile 106 pour la mémorisation de différentes données, dont l'état de la boucle d'inviolabilité, un circuit de détection d'état 107 lié à une unité de gestion 108 de la boucle.

Pour cette boucle d'inviolabilité 101, cela requiert trois bornes de connexion avec une borne liée à la borne de masse, une borne liée à l'unité de gestion 108 et une borne liée à une source de courant Ipol par l'intermédiaire d'une résistance R1. Une autre résistance R2 est disposée entre la borne liée à la masse et celle liée à l'unité de gestion 108. Comme pour le précédent document, aucune disposition n'est prévue pour l'agencement d'une boucle d'inviolabilité pour un transpondeur recevant ou émettant des signaux à des fréquences porteuses différentes, ce qui constitue un inconvénient.

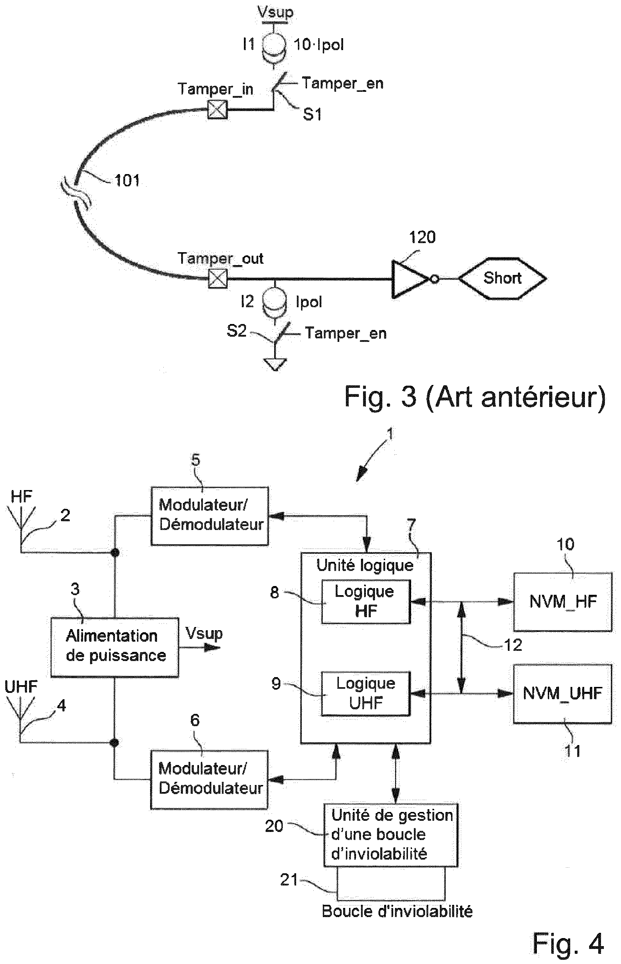

A la figure 3, il est représenté sommairement le principe de fonctionnement d'une boucle d'inviolabilité 101 connectée à deux bornes de connexion Tamper_in et Tamper_out du circuit intégré d'un transpondeur. Un signal d'entrée logique Tamper_en contrôle l'utilisation de l'unité de gestion de l'état de la boucle d'inviolabilité 101. Ce signal d'entrée Tamper_en permet de commander la fermeture d'un premier interrupteur S1 relié entre une source de courant I1 liée à une tension d'alimentation Vsup et une première borne de connexion Tamper_in de la boucle. Le signal d'entrée Tamper en permet de commander aussi la fermeture d'un second interrupteur S2 entre une seconde borne de connexion Tamper_out de la boucle et une source de courant I2 liée à la masse.

La valeur du courant de la source de courant I1 est plus grande que la valeur de courant de la source de courant I2, par exemple 10 fois supérieure. Un inverseur 120 peut encore être prévu en liaison de la seconde borne de connexion Tamper_out pour fournir un signal de sortie Short de l'état de la boucle d'inviolabilité 101. Lorsque les deux interrupteurs S1 et S2 sont fermés, l'état du signal de sortie de l'inverseur 120 est à l'état bas pour indiquer que la boucle d'inviolabilité n'est pas brisée et dans l'état haut si la boucle est brisée.

Aucun document de l'état de la technique ne décrit l'utilisation de deux gammes de fréquence différentes pour une communication de données d'un transpondeur, qui est muni d'une boucle d'inviolabilité. Ces bandes de fréquence sont par exemple la bande HF à 13.56 MHz pour des communications à champ proche NFC et la bande UHF à 915 MHz pour des communications à longues distances. Comme la boucle d'inviolabilité peut être de n'importe quelle forme, elle peut se comporter comme une antenne radio dans un environnement électromagnétique bruyant. Par conséquent, il est nécessaire d'implémenter une circuiterie à compatibilité électromagnétique (EMC) pour obtenir une mesure convenable de l'état de la boucle d'inviolabilité.

Le transpondeur fonctionne généralement à une faible puissance, qui est limitée en fonction du champ électromagnétique utilisé pour la communication. Dans ces conditions, il doit être impératif, que la fonction d'inviolabilité du circuit consomme peu de courant tout en ayant un temps de mesure suffisamment court pour déterminer l'état de la boucle d'inviolabilité. Il ne doit également pas être perturbé par un condensateur parasite d'assemblage externe connecté aux bornes de la boucle d'inviolabilité, lorsque cette dernière est absente ou brisée.

## RESUME DE L'INVENTION

L'invention a donc pour but de pallier aux inconvénients de l'état de la technique susmentionné en fournissant un circuit RFID à deux fréquences de communication muni d'une boucle d'inviolabilité liée à une unité de gestion.

A cet effet, l'invention concerne un circuit RFID à deux fréquences de communication muni d'une boucle d'inviolabilité liée à une unité de gestion, qui comprend les caractéristiques définies dans la revendication indépendante 1.

Des formes particulières d'exécution du circuit RFID sont définies dans les revendications dépendantes 2 à 15.

Un avantage du circuit RFID muni d'une boucle d'inviolabilité réside dans le fait que l'unité de gestion de l'état de la boucle d'inviolabilité du circuit RFID est conçue pour ne pas être perturbée par toute communication aux deux fréquences de communication et en tenant compte du circuit résonant formé de la boucle d'inviolabilité et d'un condensateur parasite monté aux bornes de connexion de la boucle d'inviolabilité.

Avantageusement, le circuit RFID comprend au moins un filtre passe-bas relié à chaque borne de connexion de la boucle d'inviolabilité de manière à filtrer les interférences. Chaque filtre est conçu pour filtrer les interférences d'une communication à au moins une première fréquence et/ou à au moins une seconde fréquence différente de la première fréquence. Chaque filtre passe-bas peut être identique pour garantir une symétrie afin de réduire un facteur de qualité Q du circuit résonant formé de la boucle et du condensateur parasite en entrée. Par conséquent n'importe quelle tension induite sur une borne de connexion est automatiquement compensée par la tension inverse sur l'autre borne de connexion.

Avantageusement, l'unité de gestion de l'état de la boucle d'inviolabilité du circuit RFID comprend au moins un premier filtre passe-bas relié à chaque borne de connexion de la boucle d'inviolabilité suivi par un second filtre passe-bas pour filtrer toutes les interférences. Chaque premier filtre passe-bas et chaque second filtre passe-bas successif sont conçus pour filtrer les interférences d'une communication à une première fréquence et à une seconde fréquence différente de la première fréquence. De préférence, la première fréquence est une fréquence de l'ordre de 13.56 MHz, et la seconde fréquence est une fréquence de l'ordre de à 915 MHz.

## BREVE DESCRIPTION DES FIGURES

Les buts, avantages et caractéristiques du circuit RFID à deux fréquences de communication muni d'une boucle d'inviolabilité apparaîtront mieux dans la description suivante sur la base d'au moins une forme d'exécution non limitative illustrée par les dessins sur lesquels :

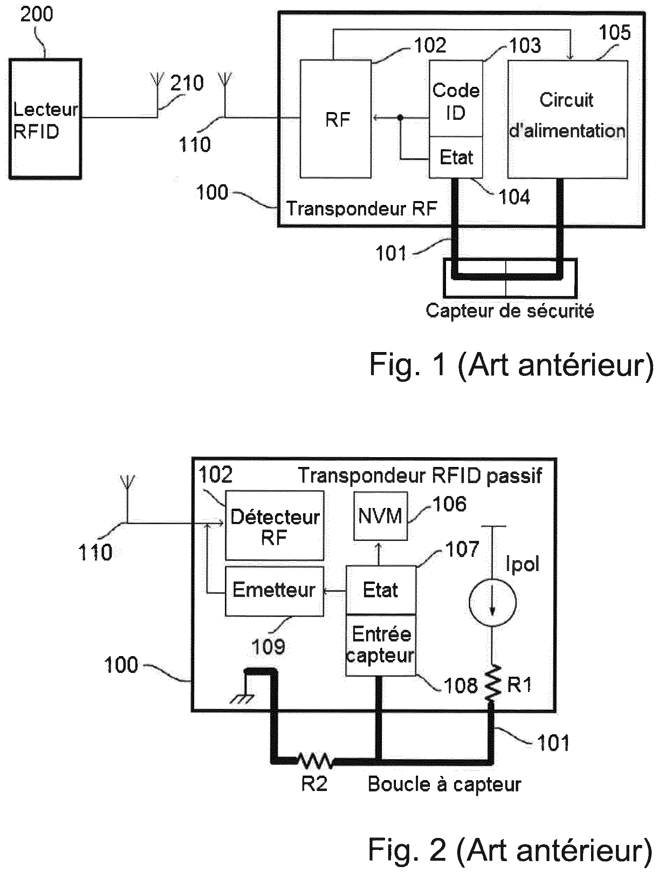

- la figure 1 déjà citée représente schématiquement une première forme d'exécution d'un circuit électronique RFID muni d'une boucle d'inviolabilité de l'état de la technique,

- la figure 2 déjà citée représente schématiquement une seconde forme d'exécution d'un circuit électronique RFID muni d'une boucle d'inviolabilité de l'état de la technique,

- la figure 3 déjà citée représente un schéma de principe d'une unité de gestion de l'état d'une boucle d'inviolabilité pour un circuit RFID de l'état de la technique,

- la figure 4 représente schématiquement une forme d'exécution d'un circuit RFID à deux fréquences de communication, muni d'une boucle d'inviolabilité selon l'invention, et

- la figure 5 représente les différents composants d'une unité de gestion de l'état de la boucle d'inviolabilité pour le circuit RFID à deux fréquences de communication selon l'invention.

DESCRIPTION DETAILLEE DE L'INVENTION

Dans la description suivante, tous les composants électroniques du circuit RFID à deux fréquences de communication, qui sont bien connus de l'homme du métier dans ce domaine technique ne seront relatés que de manière simplifiée. L'accent principal porte sur l'unité de gestion de l'état de la boucle d'inviolabilité du circuit RFID comme expliqué ci-après.

La figure 4 représente une forme d'exécution d'un circuit RFID à deux fréquences de communication, muni d'une boucle d'inviolabilité selon l'invention. Le circuit RFID est de préférence un transpondeur 1, qui est agencé pour pouvoir communiquer avec un interrogateur RFID, tel qu'un lecteur RFID. Une première fréquence de communication peut être plus petite qu'une seconde fréquence de communication.

Le transpondeur 1 comprend une première antenne 2 agencée pour fonctionner à une première fréquence, qui peut être une première haute fréquence située entre 3 MHz et 30 MHz, et de préférence de l'ordre de 13.56 MHz pour établir une communication à champ proche NFC. Cette première antenne 2 peut recevoir ou transmettre des signaux de communication selon un premier protocole de communication. La première antenne 2 est reliée à un premier modulateur/démodulateur 5 pour moduler les données à transmettre ou démoduler les données à recevoir. Le premier modulateur/démodulateur 5 est connecté à une unité logique 7 pour traiter les données démodulées reçues ou les données à transmettre. L'unité logique 7 comprend une première unité de commande HF 8 et une seconde unité de commande UHF 9. La première unité de commande HF 8 est agencée pour traiter des données selon le premier protocole de communication, alors que la seconde unité de commande UHF 9 est agencée pour traiter des données selon un second protocole de communication.

Le transpondeur 1 comprend encore une seconde antenne 4 agencée pour fonctionner à une seconde fréquence, qui peut être une ultra haute fréquence UHF située entre 300 MHz et 3 GHz, et de préférence de l'ordre de 915 MHz pour établir une communication à longue distance. La seconde antenne 4 peut recevoir ou transmettre des signaux de communication selon le second protocole de communication. Ce second protocole de communication peut être par exemple le protocole EPC Class-1 Generation-2 (Gen2). La seconde antenne 4 est reliée à un second modulateur/démodulateur 6, qui est relié à l'unité logique 7. Ainsi, les signaux reçus ou transmis selon ce second protocole sont traités par la seconde unité de commande UHF 9.

La première unité de commande HF 8 est connectée à une première mémoire non volatile 10 (NVM_HF), alors que la seconde unité de commande UHF 9 est connectée à une seconde mémoire non volatile 11 (NVM_UHF). Un bus mémoire 12 peut encore être prévu pour connecter les deux mémoires non volatiles. Une source d'alimentation 3 est encore prévue dans le circuit RFID (transpondeur) pour fournir la tension d'alimentation Vsup aux différents composants électroniques du circuit RFID. Ce transpondeur peut donc être du type passif avec l'alimentation électrique fournie en rectifiant des signaux radiofréquences reçus par la première antenne 2 ou la seconde antenne 4, ou du type actif avec une source d'énergie propre au circuit RFID.

Le circuit RFID 1 comprend encore une unité de gestion 20 de l'état d'une boucle d'inviolabilité 21. La boucle d'inviolabilité 21 est généralement connectée à deux bornes ou plages de contact ou de connexion du circuit intégré RFID pour être reliée aux composants de gestion de l'unité de gestion 20 connectée à l'unité logique 7. Comme expliqué par la suite, l'unité de gestion 20 détermine l'état de la boucle d'inviolabilité 21, qui peut être intacte ou brisée. L'état de la boucle peut être communiqué à la première unité de commande HF 8 ou à la seconde unité de commande UHF 9 pour une transmission de cette information selon le premier protocole ou le second protocole. L'état de la boucle peut également être mémorisé dans une des mémoires non volatiles, par exemple dans la seconde mémoire non volatile 11 (NVM_UHF).

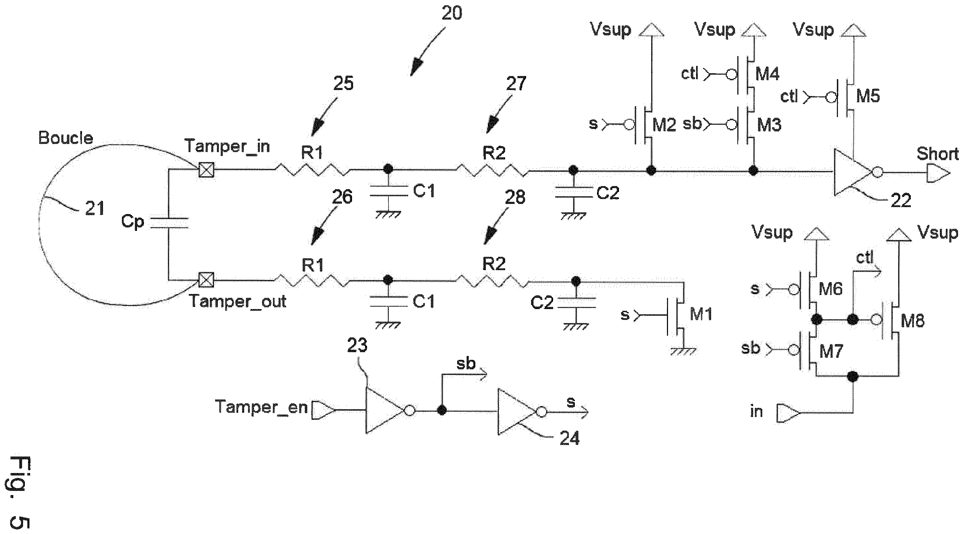

La figure 5 représente les différents composants de l'unité de gestion 20 de l'état de la boucle d'inviolabilité 21 pour le circuit RFID à deux fréquences de communication. La boucle d'inviolabilité 21 est connectée à deux bornes ou plages de connexion Tamper_in et Tamper_out en étant associée à un condensateur parasite Cp définissant comme un circuit résonant à facteur de qualité Q. Comme expliqué plus en détail par la suite, un signal d'entrée logique Tamper_en est fourni depuis l'unité logique pour contrôler l'utilisation de l'unité de gestion 20, et un signal de sortie Short est fourni pour donner l'état de la boucle d'inviolabilité 21. Un connecteur d'entrée in est encore prévu pour établir un petit courant de référence disponible dans le circuit RFID. L'unité de gestion 20 est connectée entre la tension d'alimentation Vsup et la masse.

Depuis la première borne de connexion Tamper_in, l'unité de gestion 20 comprend au moins un premier filtre passe-bas 25 composé d'une première résistance R1 reliée à la première borne de connexion Tamper_in, et d'un premier condensateur C1 relié à la masse. Depuis la seconde borne de connexion Tamper_out, l'unité de gestion 20 comprend au moins un second filtre passe-bas 26 composé d'une première résistance R1 reliée à la seconde borne de connexion Tamper_out, et d'un premier condensateur C1 relié à la masse. De préférence, le premier filtre passe-bas 25 lié à la première borne de connexion est identique au second filtre passe-bas 26 lié à la seconde borne de connexion. Ces filtres passe-bas reliés aux bornes de connexion permettent d'assurer la compatibilité électromagnétique et le filtrage pour le traitement des données.

Un autre couple de filtres passe-bas peut encore être connecté à la suite du premier filtre passe-bas 25 et du second filtre passe-bas 26. Ainsi un troisième filtre passe-bas 27 (R2, C2) est relié au premier filtre passe-bas 25 et un quatrième filtre passe-bas 28 (R2, C2) est relié au second filtre passe-bas 26. Une seconde résistance R2 du troisième filtre passe-bas 27 est reliée au nœud de connexion de la première résistance R1 et du premier condensateur C1 du premier filtre passe-bas 25, alors qu'un second condensateur C2 est relié à la masse. Une seconde résistance R2 du quatrième filtre passe-bas 28 est reliée au nœud de connexion de la première résistance R1 et du premier condensateur C1 du second filtre passe-bas 26, alors qu'un second condensateur C2 est relié à la masse. De préférence, le troisième filtre passe-bas 27 est identique au quatrième filtre passe-bas 28 pour assurer la symétrie de l'unité de gestion.

Il est à noter que tous les condensateurs C1, C2 des filtres passe-bas peuvent aussi être reliés à la borne de tension d'alimentation Vsup plutôt qu'à la masse.

Le nœud de connexion de la seconde résistance R2 et du second condensateur C2 du troisième filtre passe-bas 27 est relié à un premier inverseur 22, qui fournit un signal de sortie Short représentant l'état de la boucle d'inviolabilité pour l'unité logique. Le nœud de connexion de la seconde résistance R2 et du second condensateur C2 du quatrième filtre passe-bas 28 est relié en série à un transistor MOS M1, qui est de préférence un premier transistor NMOS, dont la source est reliée à la masse, et qui est commandé sur sa grille par un signal d'activation s dépendant directement d'un signal d'entrée logique Tamper_en fourni depuis l'unité logique. Le signal d'entrée logique est tout d'abord fourni à un second inverseur 23, suivi par un troisième inverseur 24 pour fournir le signal d'activation s. Le second inverseur 23 fournit un signal d'activation inverse sb. Un second transistor MOS M2 est relié entre la borne de tension d'alimentation Vsup et le nœud de connexion de la seconde résistance R2 et du second condensateur C2 du troisième filtre passe-bas. De préférence, ce second transistor M2 est un transistor PMOS commandé sur sa grille par le signal d'activation s.

Il est encore prévu un troisième transistor MOS M3 en série avec un quatrième transistor MOS M4 disposés entre la borne de tension d'alimentation Vsup et le nœud de connexion de la seconde résistance R2 et du second condensateur C2 du troisième filtre passe-bas 27. Ces troisième et quatrième transistors MOS M3, M4 sont de préférence des transistors PMOS. La grille du troisième transistor M3 est commandée par le signal d'activation inverse sb, alors que la grille du quatrième transistor M4 est commandée par un signal de contrôle ctl. L'ensemble du troisième transistor M3 et du quatrième transistor M4 constitue une source courant, lorsque les deux transistors sont rendus conducteurs, pour traverser les filtres passe-bas, la boucle d'inviolabilité 21 si intacte et le premier transistor M1 rendu conducteur, et qui est un commutateur.

Pour fournir ce signal de contrôle ctl, il est prévu en série entre la borne d'alimentation Vsup et une borne de courant de référence in, un sixième transistor MOS M6 et un septième transistor MOS M7, qui sont de préférence des transistors PMOS. Un huitième transistor MOS M8, qui est de préférence un transistor PMOS, est monté en parallèle des sixième et septième transistors PMOS M6, M7, en étant relié entre la borne d'alimentation Vsup et la borne de courant de référence in. La grille du huitième transistor PMOS M8 est reliée au nœud de connexion des sixième et septième transistors PMOS M6, M7, qui fournit, le signal de contrôle ctl. La grille du sixième transistor PMOS M6 est commandée par le signal d'activation s, alors que la grille du septième transistor PMOS M7 est commandée par le signal d'activation inverse sb.

Il peut être prévu encore un cinquième transistor MOS M5 pour l'activation du premier inverseur 22. Ce cinquième transistor M5 peut être un transistor PMOS relié entre l'alimentation du premier inverseur 22 et la borne d'alimentation Vsup. La grille du cinquième transistor M5 est commandée par le signal de contrôle ctl. Généralement, ce cinquième transistor M5 est conducteur quand les troisième et quatrième transistors M3, M4 sont conducteurs. Toutefois, il peut aussi être envisagé de laisser le premier inverseur 22 toujours activé et alimenté directement à la tension d'alimentation Vsup.

Au début, le signal d'entrée logique Tamper_en est établi à 0, ce qui signifie que le premier transistor M1 est OFF et le second transistor M2 est ON. Par conséquent, tous les condensateurs C1, C2 par la boucle d'inviolabilité 21 sont pré-chargés. Ensuite durant la période d'évaluation, le signal d'entrée logique Tamper_en est établi à 1, ce qui mène du côté de l'alimentation positive de puissance Vsup, pour commuter M2 OFF le remplaçant par les troisième et quatrième transistors PMOS M3, M4, qui sont activés par le signal d'activation inverse sb et le signal de contrôle ctl.

La boucle d'inviolabilité 21 doit travailler dans un environnement électromagnétique bruyant, comme des champs électromagnétiques sont utilisés pour communiquer avec le circuit RFID, c'est-à-dire avec le transpondeur. Par conséquent lorsque la boucle d'inviolabilité 21 est présente, elle doit se comporter comme un court-circuit, et lorsqu'elle est ouverte ou brisée comme un circuit ouvert malgré sa caractéristique inductive.

Actuellement, la boule d'inviolabilité 21 est une partie d'un circuit résonant, qui comprend encore le condensateur parasite Cp. La boucle reçoit les champs électromagnétiques et les modifie en tension, qui est amplifiée par le facteur de qualité Q du circuit résonant. Pour pouvoir limiter les effets indésirables de la tension induite générée par les champs électromagnétiques, l'unité de gestion 20 est conçue ainsi pour réduire le facteur de qualité Q du circuit résonant. Ceci permet d'éviter d'accumuler de l'énergie non désirable. Ainsi, la circuiterie reliée aux bornes de connexion doit être symétrique pour réduire ce facteur de qualité Q. Par conséquent n'importe quelle tension induite sur une borne de connexion est compensée automatiquement par la tension inverse sur l'autre borne de connexion, et par conséquent la masse n'est pas perturbée par n'importe quelle charge injectée.

Ci-après, il est indiqué des exemples de dimensionnement des composants de l'unité de gestion de la boucle d'inviolabilité. Les équations, qui gouvernent le choix des composants de l'unité de gestion sont définis comme suit :

$Rc = 2 \cdot (L/C)^{1/2}$, où Rc est la résistance critique d'un circuit résonant LC,

$F = 1/(2 \cdot \pi \cdot (L \cdot C)^{1/2})$, où F est la fréquence de résonance d'un circuit résonant LC,

$Ei = K \cdot L \cdot 2 \cdot \pi \cdot F \cdot I$, où Ei est la tension induite créée par une boucle similaire (L) ayant un facteur de couplage de K et puisant un courant I à la fréquence F,

$L = \mu_0 \cdot (\pi/2) \cdot R$, où R est le rayon de la boucle et $\mu_0$ est la constante universelle valant $4 \cdot \pi \cdot 10^{-7}$.

Pour définir le facteur de qualité Q de l'unité de gestion 20 liée à la boucle d'inviolabilité 21, on doit prendre en compte les faits suivants :

On évalue que la boucle, qui généralement a la forme d'une ligne court-circuitée, peut être dans ce cas une boucle circulaire avec un rayon de 2 cm menant à une inductance de 40 nH comme suit :

$$L = \mu_0 \cdot (\pi/2) \cdot R = 4 \cdot \pi \cdot 10^{-7} \cdot (\pi/2) \cdot 2 \cdot 10^{-2} = 40 \text{ nH environ.}$$

Le premier condensateur interne C1 des premier et second filtres passe-bas ne doit pas être trop grand pour gagner de la place dans le transpondeur. Par conséquent, on a trouvé intéressant d'avoir une fréquence de résonance un peu en dessous de la bande UHF 915 MHz, qu'on utilise. Un bon compromis est d'utiliser 484 MHz comme fréquence de résonance pour concevoir le circuit de l'unité de gestion menant à un condensateur acceptable de 2.7 pF comme suit :

$$C = 1/(L \cdot (2 \cdot \pi \cdot F)^2) = 2.70 \text{ pF environ}$$

Comme le condensateur C représente la valeur combinée des deux condensateurs C1 en série, on peut calculer C1 comme suit:

$$C1 = 2 \cdot C = 2 \cdot 2.70 \text{ pF} = 5.4 \text{ pF}$$

Le second composant de la circuiterie de l'unité de gestion est la valeur de la résistance, qui puise l'énergie, et qui peut être calculée comme suit :

$$Rc = 2 \cdot (L/C)^{1/2} = 2 \cdot (40 \text{ nH}/2.70 \text{ pF})^{1/2} = 240 \text{ Ohms environ.}$$

Comme la résistance Rc représente la valeur combinée des deux premières résistances R1 en série des premier et second filtres passe-bas, on peut calculer R1 comme suit :

$$R1 = Rc/2 = 120 \text{ Ohms.}$$

Par conséquent, on a obtenu les valeurs des composants R1 et C1 des premier et second filtres passe-bas.

On peut noter que les premier et second filtres passe-bas ont une fréquence de coupure Fc comme suit :

$$Fc = 1/(2 \cdot \pi \cdot R1 \cdot C1) = 246 \text{ MHz}$$

Il est par contre à noter que ces premier et second filtres passe-bas sont inefficaces contre la perturbation du canal à 13.56 MHz en utilisation dans le transpondeur.

Le second canal de communication dans la bande de 13.56 MHz est loin de la fréquence de résonance de la boucle d'inviolabilité 21 associée à la circuiterie de l'unité de gestion 20. Par conséquent, on peut calculer la tension induite comme suit en considérant un facteur de couplage K de 0.1 et un courant induit de 1 A (unité de référence) :

$$Ei = K \cdot L \cdot 2 \cdot \pi \cdot F \cdot I = 340 \text{ mV}$$

Comme cette tension calculée est évaluée un peu trop grande pour être directement appliquée aux drains des transistors MOS comme M1, M2 ou M3, des troisième et quatrième filtres passe-bas R2, C2 ont été ajoutés.

Pour calculer facilement les composants R2 et C2 de ces filtres passe-bas, et étudier des comportements simples, quelques points doivent être pris en considération :
La fréquence de coupure F2 des troisième et quatrième filtres passe-bas doit être autour d'une décade sous la bande de communication de 13.56 MHz. Il est généralement utilisé trois décades.

La seconde résistance R2 doit être beaucoup plus grande que la première résistance R1, alors que le premier condensateur C1 doit être beaucoup plus grand que le second condensateur C2 de manière que les plus petits composants puissent être négligés.

La seconde résistance R2 ne doit pas être trop haute pour avoir une faible chute de tension Vd, lorsque la boucle est présente comme il y a un courant de maintien Im de 40 nA à travers lui. Par conséquent, Vd doit rester de quelques dizaines de mV. Dans le cas de la présence de la boucle d'inviolabilité 21, cette chute de tension à travers les résistances R1, R2 doit être en principe en dessous d'une valeur seuil de commutation du premier inverseur 22, par exemple en dessous de Vsup/2 pour avoir un signal de sortie à 1 en sortie du premier inverseur 22.

Pour laisser la possibilité d'ajouter un condensateur d'assemblage dans la même gamme que le premier condensateur C1, la constante de temps intrinsèque de la pré-charge ou de la décharge du premier condensateur C1 doit être autour de 1 à 2 $\mu$s comme les temps de pré-charge ou de décharge peuvent durer 100 $\mu$s au plus.

Par conséquent, en prenant en compte toutes ces considérations, un bon compromis est trouvé en utilisant les valeurs suivantes :
R2 = 200 kOhms et C2 = 0.5 pF ce qui donne le résultat suivant :
F2 = 1/(2·$\pi$·R2·C2) = 1.59 MHz (environ trois octaves en-dessous)

$$R2 \gg R1 \text{ (200 kOhms} \gg \text{120 Ohms) et } C1 \gg C2 \text{ (5.4 pF} \gg \text{0.5 pF)}$$

Comme pour la chute de tension Vd = 2·R1·Im = 16 mV
et la constante de temps de pré-charge ou de décharge :

$$T = R2 \cdot 2 \cdot C1 = 2.2 \text{ }\mu s$$

La circuiterie de l'unité de gestion 20 avec les filtres passe-bas 25, 26, 27, 28 permettent de retirer les effets inductifs de champs électromagnétiques de voisinage pour que la boucle d'inviolabilité puisse être considérée comme un court-circuit détectable, lorsqu'il est présent.

Le premier condensateur C1 des premier et second filtres passe-bas a aussi la propriété d'aider de détecter la brisure ou l'absence de la boucle d'inviolabilité, lorsqu'il ne reste que le condensateur parasite d'assemblage Cp, parce qu'un partage de charges prend place, ce qui évite d'avoir un diagnostic erroné.

Pour expliquer le comportement de la partie active de l'unité de gestion 20, il doit être considéré le premier cas, où la boucle d'inviolabilité 21 est présente avant le début de l'évaluation de son état, et le second cas, où la boucle d'inviolabilité 21 est interrompue ou brisée ou jamais connectée.

Dans le premier cas susmentionné, un miroir de courant est dans un état OFF malgré le fait que le courant in est toujours disponible. Comme les nœuds Tamper_in et Tamper_out sont pré-chargés, le signal de sortie Short est établi à 0, car un transistor NMOS dans le premier inverseur 22 n'est pas commandé en courant.

Comme expliqué ci-dessus durant la période d'évaluation, le signal de commande Tamper_en est établi à 1, ce qui conduit du côté de l'alimentation positive Vsup pour commuter le second transistor M2 OFF et en le remplaçant par la paire des troisième et quatrième transistors M3, M4. Cela entraîne un très petit courant par exemple de l'ordre de 40 nA pour maintenir le niveau de tension dans le cas où la boucle d'inviolabilité est absente. Le cinquième transistor M5 est aussi capable d'entraîner 40 nA pendant que le miroir de courant est actif. Du côté de la masse, le premier transistor M1 est commuté ON, ce qui mène à décharger tous les condensateurs des deux côtés de la boucle d'inviolabilité. Par conséquent, l'entrée du premier inverseur 22 est à un niveau 0 en dessous d'une valeur seuil de commutation du premier inverseur 22. Cela indique la présence d'un court-circuit entre Tamper_in et Tamper_out.

Il est à noter qu'un très petit courant permanent limité à 80 nA est nécessaire pour assurer le bon fonctionnement de cette fonction. Il y a un courant de 40 nA à travers le huitième transistor M8 pour contrôler la tension du miroir de courant et 40 nA à travers la paire des troisième et quatrième transistors M3, M4 en essayant de maintenir le niveau de tension. Cependant cela n'est pas possible car le premier transistor M1 et les résistances associées sont plus forts, et le reste de la consommation est seulement transitoire durant les commutations et pas permanentes.

Dans le second cas susmentionné, le signal d'entrée logique Tamper_en est établi à 0, ce qui signifie que le premier transistor M1 est OFF et le second transistor M2 est ON. Cependant, cette fois, les condensateurs sont différemment pré-chargés. Les condensateurs C1 et C2 du côté Tamper_in sont pleinement pré-chargés, alors que le condensateur parasite Cp et les condensateurs C1 et C2 du côté Tamper_out sont partiellement chargés comme le condensateur équivalent est Cp en série avec un montage en parallèle de C1 et C2 étant donné que la boucle d'inviolabilité 21 est absente.

Ensuite durant la période d'évaluation, le signal d'entrée logique Tamper_en est établi à 1, ce qui mène à décharger partiellement les condensateurs C1 et C2, qui sont du côté Tamper_out. Cette décharge a un léger effet du côté Tamper_in comme le condensateur parasite Cp est seulement partiellement chargé menant à un partage de charges des charges stockées dans C1 et C2 du côté Tamper_in. Cependant, cet effet n'a pas de conséquences nocives, étant donné que la quantité de charges partagées n'est pas assez grande en considérant la valeur permise de Cp pour abaisser la tension d'entrée du premier inverseur 22 sous son point de commutation. De plus, la paire des troisième et quatrième transistors M3, M4 est active pour restaurer le niveau de tension. Par conséquent, le niveau sur Tamper_in est maintenu à 1 comme l'entrée du premier inverseur 22. Ainsi le signal de sortie Short reste bloqué à 0, ce qui signifie l'absence de court-circuit ave la boucle d'inviolabilité ouverte.

Il est à noter que durant la période d'évaluation, la consommation courante permanente est limitée à 40 nA, ce qui correspond au courant de référence attaquant le miroir de courant, comme une fois que la paire des troisième et quatrième transistors M3, M4 a restauré le niveau de tension, il n'y a plus de courant à travers lui. Comme la boucle d'inviolabilité est absente, aucun courant permanent ne passe par le premier transistor M1.

Une autre utilisation de cette unité de gestion 20 de la boucle d'inviolabilité 21 est de gérer de manière permanente l'état de la boucle d'inviolabilité ou d'un commutateur. Durant la période d'évaluation, qui peut durer aussi longtemps que souhaité, la consommation courante est limitée à 80 nA, lorsque la boucle est présente ou le commutateur fermé, alors que le signal Short est établi à 1. Par contre lorsque la boucle 21 est ouverte, ou le commutateur est ouvert, la paire des troisième et quatrième transistors M3, M4 charge le nœud Tamper_in menant le signal de sortie Short à 0.

L'évaluation ou la détermination de l'état de la boucle d'inviolabilité 21 peut être automatiquement effectuée par périodes temporelles programmées et sur commande de l'unité logique. En principe, il peut aussi être envisagé que dès la détection de brisure de la boucle d'inviolabilité, cette information est automatiquement mémorisée dans l'une des mémoires non volatiles de manière à transmettre cette information sur demande par une communication HF ou UHF.

A partir de la description qui vient d'être faite, plusieurs variantes du circuit RFID à deux fréquences de communication, muni d'une boucle d'inviolabilité peuvent être conçues par l'homme du métier sans sortir du cadre de l'invention définie par les revendications. Plusieurs filtres passe-bas peuvent être connectés les uns à la suite des autres depuis chaque borne de connexion de la boucle d'inviolabilité. La source de courant réalisée avec les troisième et quatrième transistors MOS peut être reliée à la masse, alors que le premier transistor en tant que commutateur peut être relié à la tension d'alimentation.

**Revendications**

1. Circuit RFID (1) à deux fréquences de communication, comprenant une unité logique (7) pour le traitement de signaux de données reçus ou transmis à une première fréquence par une première antenne (2) ou à une seconde fréquence par une seconde antenne (4), la première fréquence de communication (HF) étant inférieure à la seconde fréquence de communication (UHF), l'unité logique (7) étant connectée à une unité de gestion (20) de l'état d'une boucle d'inviolabilité (21) liée au circuit intégré RFID par deux bornes de connexion (Tamper_in, Tamper_out), **caractérisé en ce que** l'unité de gestion (20) comprend au moins un premier filtre passe-bas (25) relié à une première borne de connexion (Tamper_in), au moins un second filtre passe-bas (26) relié à une seconde borne de connexion (Tamper_out), une source de courant (M3, M4) pour fournir un courant par le premier filtre passe-bas (25), un commutateur (M1) relié en sortie du second filtre passe-bas (26), et un premier inverseur (22) connecté entre la source de courant et le premier filtre passe-bas (25) pour fournir un signal de sortie (Short) de l'état de la boucle d'inviolabilité (21) à l'unité logique (7).

2. Circuit RFID (1) selon la revendication 1, **caractérisé en ce que** le premier filtre passe-bas (25) et le second filtre passe-bas (26) comprennent chacun une première résistance (R1) et un premier condensateur (C1).

3. Circuit RFID (1) selon la revendication 2, **caractérisé en ce que** le premier filtre passe-bas (25) est identique au second filtre passe-bas (26) avec une même première résistance (R1) et un même premier condensateur (C1).

**4.** Circuit RFID (1) selon la revendication 2, **caractérisé en ce que** la première résistance (R1) du premier filtre passe-bas (25) est reliée à la première borne de connexion (Tamper_in), **en ce que** le premier condensateur (C1) du premier filtre passe-bas (25) est relié à une borne de masse ou à une borne de tension d'alimentation (Vsup), **en ce que** la première résistance (R1) du second filtre passe-bas (26) est reliée à la seconde borne de connexion (Tamper_out), et **en ce que** le premier condensateur (C1) du second filtre passe-bas (26) est relié à une borne de masse ou à une borne de tension d'alimentation (Vsup).

**5.** Circuit RFID (1) selon la revendication 2, **caractérisé en ce qu'**un troisième filtre passe-bas (27) est connecté au premier filtre passe-bas (25) entre le premier filtre passe-bas (25) et la source de courant reliée à une entrée du premier inverseur (22), et **en ce qu'**un quatrième filtre passe-bas (28) est connecté au second filtre passe-bas (26) entre le second filtre passe-bas (26) et le commutateur (M1).

**6.** Circuit RFID (1) selon la revendication 5, **caractérisé en ce que** le troisième filtre passe-bas (27) et le quatrième filtre passe-bas (28) comprennent chacun une seconde résistance (R2) et un second condensateur (C2), **en ce que** la seconde résistance (R2) du troisième filtre passe-bas (27) est reliée à un nœud de connexion de la première résistance (R1) et du premier condensateur (C1) du premier filtre passe-bas (25), **en ce que** la seconde résistance (R2) du quatrième filtre passe-bas (28) est reliée à un nœud de connexion de la première résistance (R1) et du premier condensateur (C1) du second filtre passe-bas (26), **en ce qu'**un nœud de connexion de la seconde résistance (R2) et du second condensateur (C2) du troisième filtre passe-bas (27) est reliée à la source de courant (M3, M4) et à une entrée du premier inverseur (22), et **en ce qu'**un nœud de connexion de la seconde résistance (R2) et du second condensateur (C2) du quatrième filtre passe-bas (28) est reliée au commutateur (M1).

**7.** Circuit RFID (1) selon la revendication 6, **caractérisé en ce que** le troisième filtre passe-bas (27) est identique au quatrième filtre passe-bas (28) avec une même seconde résistance (R2) et un même second condensateur (C2).

**8.** Circuit RFID (1) selon la revendication 6, **caractérisé en ce qu'**un second transistor PMOS (M2) est relié entre une borne de tension d'alimentation (Vsup) et le nœud de connexion de la seconde résistance (R2) et du second condensateur (C2) du troisième filtre passe-bas (27), une grille du second transistor PMOS étant commandée par un signal d'activation (s).

**9.** Circuit RFID (1) selon la revendication 1, **caractérisé en ce que** le commutateur (M1) est un transistor MOS relié en sortie du second filtre passe-bas (26) et connecté à une borne de masse.

**10.** Circuit RFID (1) selon la revendication 9, **caractérisé en ce que** le transistor MOS est un transistor NMOS (M1), dont une grille est commandée par un signal d'activation (s) pour rendre conducteur le transistor NMOS pour le passage d'un courant provenant de la source de courant (M3, M4), qui est reliée à une borne de tension d'alimentation (Vsup), quand la boucle d'inviolabilité (21) n'est pas brisée ou absente.

**11.** Circuit RFID (1) selon la revendication 10, **caractérisé en ce que** la source de courant comprend un troisième transistor PMOS (M3) en série avec un quatrième transistor PMOS (M4), les troisième et quatrième transistors PMOS (M3, M4) étant disposés entre la borne de tension d'alimentation (Vsup) et une entrée du premier inverseur (22), **en ce qu'**une grille du troisième transistor PMOS (M3) est commandée par un signal de contrôle (ctl) pour le rendre conducteur, et **en ce qu'**une grille du quatrième transistor PMOS (M4) est commandée par un signal d'activation inverse (sb) pour le rendre conducteur.

**12.** Circuit RFID (1) selon l'une des revendications 8 et 11, **caractérisé en ce que** l'unité logique (7) fournit un signal d'entrée logique (Tamper_en) à l'unité de gestion (20), qui comprend un second inverseur (23) suivi par un troisième inverseur (24), le second inverseur (23) recevant le signal d'entrée logique pour fournir un signal d'activation inverse (sb) et le troisième inverseur (24) fournissant le signal d'activation (s).

**13.** Circuit RFID (1) selon la revendication 12, **caractérisé en ce que** l'unité de gestion (20) comprend entre la borne de tension d'alimentation (Vsup) et une borne de courant de référence (in), un sixième transistor PMOS (M6) relié en série à un septième transistor PMOS (M7), et un huitième transistor PMOS (M8), monté en parallèle des sixième et septième transistors PMOS (M6, M7), **en ce qu'**une grille du huitième transistor PMOS (M8) est reliée à un nœud de connexion des sixième et septième transistors PMOS (M6, M7), pour fournir le signal de contrôle (ctl), **en ce qu'**une grille du sixième transistor PMOS (M6) est commandée par le signal d'activation (s), et **en ce qu'**une grille du septième transistor PMOS (M7) est commandée par le signal d'activation inverse (sb).

14. Circuit RFID (1) selon la revendication 13, **caractérisé en ce que** l'alimentation du premier inverseur (22) est fournie par l'intermédiaire d'un cinquième transistor PMOS (M5) connecté à une borne de tension d'alimentation (Vsup), une grille de ce cinquième transistor PMOS (M5) étant commandée par le signal de contrôle (ctl)

15. Circuit RFID (1) selon la revendication 6, **caractérisé en ce que** la valeur résistive de la seconde résistance (R2) des troisième et quatrième filtres passe-bas (27, 28) est plus grande que la valeur résistive de la première résistance (R1) des premier et second filtres passe-bas (25, 26), et **en ce que** la valeur capacitive du premier condensateur (C1) des premier et second filtres passe-bas (25, 26) est plus grande que la valeur capacitive du second condensateur (C2) des troisième et quatrième filtres passe-bas (27, 28).

**Patentansprüche**

1. RFID-Schaltkreis (1) mit zwei Kommunikationsfrequenzen, der eine Logikeinheit (7) für die Verarbeitung von Datensignalen umfasst, die mit einer ersten Frequenz über eine erste Antenne (2) oder mit einer zweiten Frequenz über eine zweite Antenne (4) empfangen oder übertragen werden, wobei die erste Kommunikationsfrequenz (HF) niedriger als die zweite Kommunikationsfrequenz (UHF) ist und die Logikeinheit (7) an eine Einheit (20) zum Steuern des Zustands eines Sicherungskreislaufs (21) angeschlossen ist, die mit dem integrierten RFID-Schaltkreis über zwei Anschlussklemmen (Tamper_in, Tamper_out) verbunden ist, **dadurch gekennzeichnet, dass** die Steuereinheit (20) mindestens ein erstes Tiefpassfilter (25), das mit einer ersten Anschlussklemme (Tamper_in) verbunden ist, mindestens ein zweites Tiefpassfilter (26), das mit einer zweiten Anschlussklemme (Tamper_out) verbunden ist, eine Stromquelle (M3, M4), um durch das erste Tiefpassfilter (25) einen Strom zu liefern, einen Schalter (M1), der mit dem Ausgang des zweiten Tiefpassfilters (26) verbunden ist, und einen ersten Umschalter (22), der zwischen die Stromquelle und das erste Tiefpassfilter (25) geschaltet ist, um ein Ausgangssignal (Short) des Zustands des Sicherungskreislaufs (21) an die Logikeinheit (7) zu liefern, umfasst.

2. RFID-Schaltkreis (1) nach Anspruch 1, **dadurch gekennzeichnet, dass** das erste Tiefpassfilter (25) und das zweite Tiefpassfilter (26) jeweils einen ersten Widerstand (R1) und einen ersten Kondensator (C1) umfassen.

3. RFID-Schaltkreis (1) nach Anspruch 2, **dadurch gekennzeichnet, dass** das erste Tiefpassfilter (25) und das zweite Tiefpassfilter (26) identisch sind und denselben ersten Widerstand (R1) und denselben ersten Kondensator (C1) umfassen.

4. RFID-Schaltkreis (1) nach Anspruch 2, **dadurch gekennzeichnet, dass** der erste Widerstand (R1) des ersten Tiefpassfilters (25) mit der ersten Anschlussklemme (Tamper_in) verbunden ist, dass der erste Kondensator (C1) des ersten Tiefpassfilters (25) mit einer Erdungsklemme oder mit einer Versorgungsspannungsklemme (Vsup) verbunden ist, dass der erste Widerstand (R1) des zweiten Tiefpassfilters (26) mit der zweiten Anschlussklemme (Tamper_out) verbunden ist und dass der erste Kondensator (C1) des zweiten Tiefpassfilters (26) mit einer Erdungsklemme oder mit einer Versorgungsspannungsklemme (Vsup) verbunden ist.

5. RFID-Schaltkreis (1) nach Anspruch 2, **dadurch gekennzeichnet, dass** ein drittes Tiefpassfilter (27) an das erste Tiefpassfilter (25) zwischen dem ersten Tiefpassfilter (25) und der mit einem Eingang des ersten Umschalters (22) verbundenen Stromquelle angeschlossen ist und dass ein viertes Tiefpassfilter (28) an das zweite Tiefpassfilter (26) zwischen dem zweiten Tiefpassfilter (26) und dem Schalter (M1) angeschlossen ist.

6. RFID-Schaltkreis (1) nach Anspruch 5, **dadurch gekennzeichnet, dass** das dritte Tiefpassfilter (20) und das vierte Tiefpassfilter (28) jeweils einen zweiten Widerstand (R2) und einen zweiten Kondensator (C2) umfassen, dass der zweite Widerstand (R2) des dritten Tiefpassfilters (27) mit einem zweiten Verbindungsknoten zwischen dem ersten Widerstand (R1) und dem ersten Kondensator (C1) des ersten Tiefpassfilters (25) verbunden ist, dass der zweite Widerstand (R2) des vierten Tiefpassfilters (28) mit einem Verbindungsknoten zwischen dem ersten Widerstand (R1) und dem ersten Kondensator (C1) des zweiten Tiefpassfilters (26) verbunden ist, dass ein Verbindungsknoten des zweiten Widerstands (R2) und des zweiten Kondensators (C2) des dritten Tiefpassfilters (27) mit der Stromquelle (M3, M4) und mit einem Eingang des ersten Umschalters (22) verbunden ist und dass ein Verbindungsknoten des zweiten Widerstands (R2) und des zweiten Kondensators (C2) des vierten Tiefpassfilters mit dem Schalter (M1) verbunden ist.

7. RFID-Schaltkreis (1) nach Anspruch 6, **dadurch gekennzeichnet, dass** das dritte Tiefpassfilter (27) und das vierte Tiefpassfilter (28) identisch sind und denselben zweiten Widerstand (R2) und denselben zweiten Kondensator (C2) umfassen.

8. RFID-Schaltkreis (1) nach Anspruch 6, **dadurch gekennzeichnet, dass** ein zweiter PMOS-Transistor (M2) zwischen einer Versorgungsspannungsklemme (Vsup) und dem Verbindungsknoten des zweiten Widerstands (R2) mit dem zweiten Kondensator (C2) des dritten Tiefpassfilters (27) geschaltet ist, wobei ein Gate des zweiten PMOS-Transistors durch ein Aktivierungssignal (s) gesteuert wird.

9. RFID-Schaltkreis (1) nach Anspruch 1, **dadurch gekennzeichnet, dass** der Schalter (M1) ein MOS-Transistor ist, der mit dem Ausgang des zweiten Tiefpassfilters (26) verbunden ist und mit einer Erdungsklemme verbunden ist.

10. RFID-Schaltkreis (1) nach Anspruch 9, **dadurch gekennzeichnet, dass** der MOS-Transistor ein NMOS-Transistor (M1) ist, dessen Gate durch ein Aktivierungssignal (s) gesteuert wird, um den NMOS-Transistor für den Durchgang eines Stroms von der Stromquelle (M3, M4), die mit einer Versorgungsspannungsklemme (Vsup) verbunden ist, leitend zu machen, wenn der Sicherungskreislauf (21) nicht unterbrochen ist oder fehlt.

11. RFID-Schaltkreis (1) nach Anspruch 10, **dadurch gekennzeichnet, dass** die Stromquelle einen dritten PMOS-Transistor (M3) in Reihe mit einem vierten PMOS-Transistor (M4) umfasst, wobei der dritte und der vierte PMOS-Transistor (M3, M4) zwischen der Versorgungsspannungsklemme (Vsup) und einem Eingang des ersten Umschalters (22) angeordnet sind, dass ein Gate des dritten PMOS-Transistors (M3) durch ein Steuersignal (ctl) gesteuert wird, um ihn leitend zu machen, und dass ein Gate des vierten PMOS-Transistors (M4) durch ein inverses Aktivierungssignal (sb) gesteuert wird, um ihn leitend zu machen.

12. RFID-Schaltkreis (1) nach einem der Ansprüche 8 und 11, **dadurch gekennzeichnet, dass** die Logikeinheit (7) ein logisches Eingangssignal (Tamper_en) an die Steuereinheit (20) liefert, die einen zweiten Umschalter (23) umfasst, dem ein dritter Umschalter (24) folgt, wobei der zweite Umschalter (23) das logische Eingangssignal empfängt, um ein inverses Aktivierungssignal (sb) zu liefern, und der dritte Umschalter (24) das Aktivierungssignal (s) liefert.

13. RFID-Schaltkreis (1) nach Anspruch 12, **dadurch gekennzeichnet, dass** die Steuereinheit (20) zwischen der Versorgungsspannungsklemme (Vsup) und einer Referenzstromklemme (in) einen sechsten PMOS-Transistor (M6), der in Reihe mit einem siebten PMOS-Transistor (M7) geschaltet ist, und einen achten PMOS-Transistor (M8), der parallel zu dem sechsten und dem siebten PMOS-Transistor (M6, M7) geschaltet ist, umfasst, dass ein Gate des achten PMOS-Transistors (M8) mit einem Verbindungsknoten des sechsten und des siebten PMOS-Transistors (M6, M7) verbunden ist, um das Steuersignal (ctl) zu liefern, dass ein Gate des sechsten PMOS-Transistors (M6) durch das Aktivierungssignal (s) gesteuert wird und dass eine Gate des siebten PMOS-Transistors (M7) durch das inverse Aktivierungssignal (sb) gesteuert wird.

14. RFID-Schaltkreis nach Anspruch 13, **dadurch gekennzeichnet, dass** die Versorgung des ersten Umschalters (22) über einen fünften PMOS-Transistor (M5) erfolgt, der mit einer Versorgungsspannungsklemme (Vsup) verbunden ist, wobei ein Gate des fünften PMOS-Transistors (M5) durch das Steuersignal (ctl) gesteuert wird.

15. RFID-Schaltkreis (1) nach Anspruch 6, **dadurch gekennzeichnet, dass** der Widerstandswert des zweiten Widerstands (R2) des dritten und des vierten Tiefpassfilters (27, 28) größer ist als der Widerstandswert des ersten Widerstands (R1) des ersten und des zweiten Tiefpassfilters (25, 26) und dass der Kapazitätswert des ersten Kondensators (C1) des ersten und des zweiten Tiefpassfilters (25, 26) größer ist als der Kapazitätswert des zweiten Kondensators (C2) des dritten und des vierten Tiefpassfilters (27, 28).


**Claims**

1. Dual communication frequency RFID circuit (1), comprising a logic unit (7) for processing data signals received or transmitted at a first frequency by a first antenna (2) or at a second frequency by a second antenna (4), the first communication frequency (HF) being lower than the second communication frequency (UHF), the logic unit (7) being connected to a unit (20) for managing the state of a tamper loop (21) linked to the RFID integrated circuit by two connection terminals (Tamper_in, Tamper_out),
**characterized in that** the management unit (20) comprises at least one first low-pass filter (25) linked to a first connection terminal (Tamper_in), at least one second low-pass filter (26) linked to a second connection terminal (Tamper_out), a current source (M3, M4) for supplying a current through the first low-pass filter (25), a switch (M1) linked at the output of the second low-pass filter (26), and a first inverter (22) connected between the current source and the first low-pass filter (25) for supplying an output signal (Short) for the state of the tamper loop (21) to the logic unit (7).

2. RFID circuit (1) according to claim 1, **characterized in that** the first low-pass filter (25) and the second low-pass filter (26) each comprise a first resistor (R1) and a first capacitor (C1).

3. RFID circuit (1) according to claim 2, **characterized in that** the first low-pass filter (25) is identical to the second low-pass filter (26) with one and the same first resistor (R1) and one and the same first capacitor (C1).

4. RFID circuit (1) according to claim 2, **characterized in that** the first resistor (R1) of the first low-pass filter (25) is linked to the first connection terminal (Tamper_in), **in that** the first capacitor (C1) of the first low-pass filter (25) is linked to a ground terminal or to a supply voltage terminal (Vsup), **in that** the first resistor (R1) of the second low-pass filter (26) is linked to the second connection terminal (Tamper_out), and **in that** the first capacitor (C1) of the second low-pass filter (26) is linked to a ground terminal or to a supply voltage terminal (Vsup).

5. RFID circuit (1) according to claim 2, **characterized in that** a third low-pass filter (27) is connected to the first low-pass filter (25) between the first low-pass filter (25) and the current source linked to an input of the first inverter (22), and **in that** a fourth low-pass filter (28) is connected to the second low-pass filter (26) between the second low-pass filter (26) and the switch (M1).

6. RFID circuit (1) according to claim 5, **characterized in that** the third low-pass filter (27) and the fourth low-pass filter (28) each comprise a second resistor (R2) and a second capacitor (C2), **in that** the second resistor (R2) of the third low-pass filter (27) is linked to a connecting node for the first resistor (R1) and the first capacitor (C1) of the first low-pass filter (25), **in that** the second resistor (R2) of the fourth low-pass filter (28) is linked to a connecting node for the first resistor (R1) and the first capacitor (C1) of the second low-pass filter (26), **in that** a connecting node for the second resistor (R2) and the second capacitor (C2) of the third low-pass filter (27) is linked to the current source (M3, M4) and to an input of the first inverter (22), and **in that** a connecting node for the second resistor (R2) and the second capacitor (C2) of the fourth low-pass filter (28) is linked to the switch (M1).

7. RFID circuit (1) according to claim 6, **characterized in that** the third low-pass filter (27) is identical to the fourth low-pass filter (28) with one and the same second resistor (R2) and one and the same second capacitor (C2).

8. RFID circuit (1) according to claim 6, **characterized in that** a second PMOS transistor (M2) is linked between a supply voltage terminal (Vsup) and the connecting node for the second resistor (R2) and the second capacitor (C2) of the third low-pass filter (27), a gate of the second PMOS transistor being controlled by an activation signal(s).

9. RFID circuit (1) according to claim 1, **characterized in that** the switch (M1) is an MOS transistor linked at the output of the second low-pass filter (26) and connected to a ground terminal.

10. RFID circuit (1) according to claim 9, **characterized in that** the MOS transistor is an NMOS transistor (M1), a gate of which is controlled by an activation signal(s) so as to put the NMOS transistor into the on state to allow the flow of a current originating from the current source (M3, M4), which current source is linked to a supply voltage terminal (Vsup), when the tamper loop (21) is not broken or absent.

11. RFID circuit (1) according to claim 10, **characterized in that** the current source comprises a third PMOS transistor (M3) in series with a fourth PMOS transistor (M4), the third and fourth PMOS transistors (M3, M4) being arranged between the supply voltage terminal (Vsup) and an input of the first inverter (22), **in that** a gate of the third PMOS transistor (M3) is controlled by a control signal (ctl) so as to put it into the on state, and **in that** a gate of the fourth PMOS transistor (M4) is controlled by an inverse activation signal (sb) so as to put it into the on state.

12. RFID circuit (1) according to either of claims 8 and 11, **characterized in that** the logic unit (7) supplies a logic input signal (Tamper_en) to the management unit (20), which management unit comprises a second inverter (23) followed by a third inverter (24), the second inverter (23) receiving the logic input signal so as to supply an inverse activation signal (sb) and the third inverter (24) supplying the activation signal(s).

13. RFID circuit (1) according to claim 12, **characterized in that** the management unit (20) comprises, between the supply voltage terminal (Vsup) and a reference current terminal (in), a sixth PMOS transistor (M6) linked in series with a seventh PMOS transistor (M7), and an eighth PMOS transistor (M8), connected in parallel with the sixth and seventh PMOS transistors (M6, M7), **in that** a gate of the eighth PMOS transistor (M8) is linked to a connecting node for the sixth and seventh PMOS transistors (M6, M7) so as to supply the control signal (ctl), **in that** a gate of the sixth PMOS transistor (M6) is controlled by the activation signal(s), and **in that** a gate of the seventh PMOS transistor (M7) is controlled by the inverse activation signal (sb).

14. RFID circuit (1) according to claim 13, **characterized in that** the power supply of the first inverter (22) is supplied by way of a fifth PMOS transistor (M5) connected to a supply voltage terminal (Vsup), a gate of this fifth PMOS transistor (M5) being controlled by the control signal (ctl).

15. RFID circuit (1) according to claim 6, **characterized in that** the resistance of the second resistor (R2) of the third and fourth low-pass filters (27, 28) is greater than the resistance of the first resistor (R1) of the first and second low-pass filters (25, 26), and **in that** the capacitance of the first capacitor (C1) of the first and second low-pass filters (25, 26) is greater than the capacitance of the second capacitor (C2) of the third and fourth low-pass filters (27, 28).

200

Lecteur RFID

210

110

100

Transpondeur RF

102

RF

103

Code ID

Etat

104

105

Circuit d'alimentation

101

Capteur de sécurité

## Fig. 1 (Art antérieur)

102

Transpondeur RFID passif

110

Détecteur RF

Emetteur

109

NVM

106

Etat

107

Entrée capteur

108

Ipol

R1

100

R2

Boucle à capteur

101

## Fig. 2 (Art antérieur)

14

Fig. 3 (Art antérieur)

Fig. 4

Fig. 5

## RÉFÉRENCES CITÉES DANS LA DESCRIPTION

**Documents brevets cités dans la description**

- US 20060214789 A1
- US 9082057 B2